# EUROPÄISCHE PATENTSCHRIFT

(11) **EP 1 981 746 B1**
(45) Veröffentlichungstag und Bekanntmachung des Hinweises auf die Patenterteilung: **30.09.2009**
(21) Anmeldenummer: 06830319.7
(22) Anmeldetag: 04.12.2006
(51) Int. Cl.: B60T 8/36, F16K 31/06

(54) **Hydraulikaggregat**
Hydraulic unit
Ensemble hydraulique

(30) Priorität: 27.01.2006 DE 102006003858
(43) Veröffentlichungstag der Anmeldung: 22.10.2008
(73) Patentinhaber: Robert Bosch GmbH, 70442 Stuttgart (DE)
(72) Erfinder: KRATZER, Dietmar, 71732 Tamm (DE)
(86) Internationale Anmeldenummer: PCT/EP2006/069253
(87) Internationale Veröffentlichungsnummer: WO 2007/085319

(56) Entgegenhaltungen:
- DE-A1- 3 709 505
- DE-A1- 4 100 967
- DE-A1- 4 133 641
- DE-A1- 10 316 643
- DE-A1- 19 518 519

## Beschreibung

### Stand der Technik

Die Erfindung geht aus von einem Hydraulikaggregat nach der Gattung des unabhängigen Patentanspruchs 1.

In der Offenlegurigsschrift DE 103 16 643 A1 wird ein Magnetventil beschrieben, welches eine Magnetventilpatrone und eine Magnetbaugruppe umfasst. Die beschriebene Magnetventilpatrone umfasst ein topfförmiges Gehäuse, einen Polkern und einen Anker und die Magnetgruppe umfasst einen Spulenkörper und eine Wicklung. Die Magnetbaugruppe ist um die Magnetventilpatrone herum angeordnet und ein radiales Vorspannelement ist so zwischen einer Gewindebuchse und einem Gehäuse der Magnetbaugruppe angeordnet, dass eine radiale Kraft derart auf die Magnetbaugruppe ausgeübt wird, dass die Magnetbaugruppe eine vorbestimmte definierte Position zur Magnetventilpatrone einnimmt.

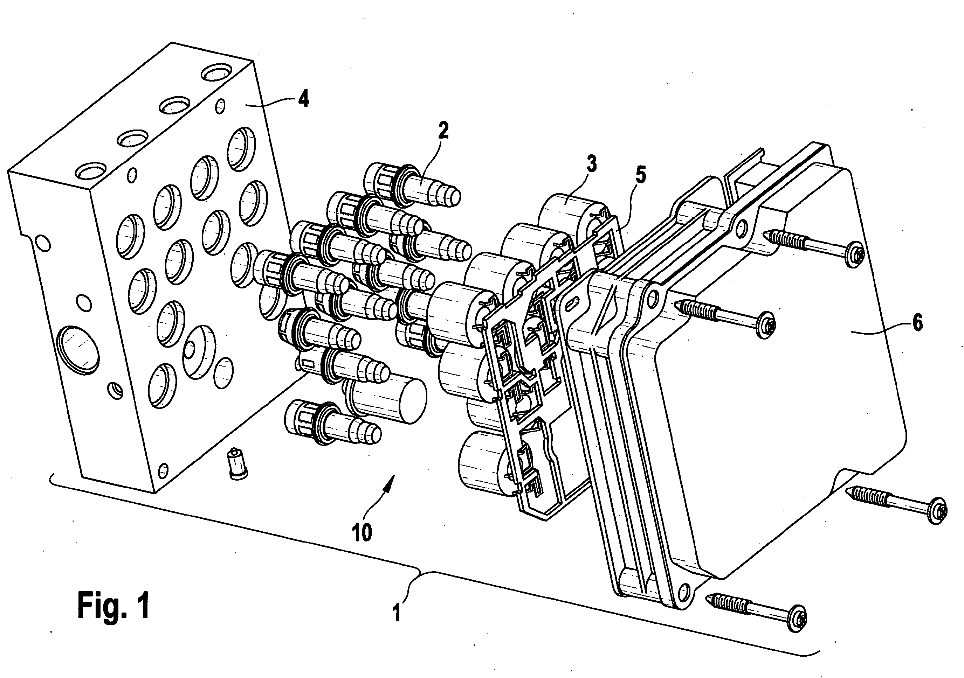

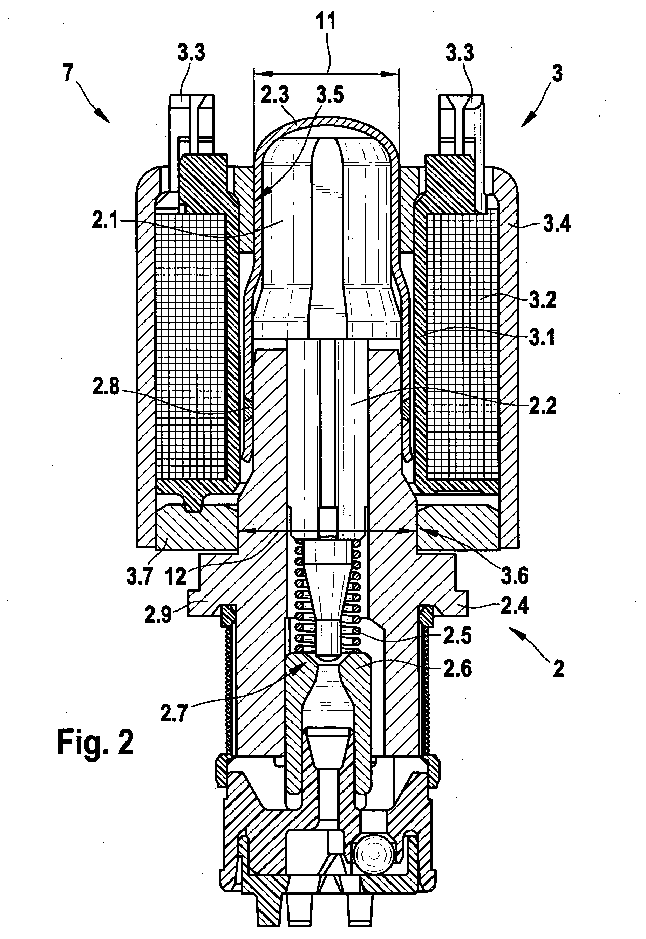

Figur 1 zeigt ein Hydraulikaggregat in Explosionsdarstellung. Die Magnetventilgruppe 10, welche mehrere Magnetventile umfasst, die jeweils aus einer Magnetventilpatrone 2 und einer Magnetbaugruppe 3 aufgebaut sind, wird in einen Fluidblock 4 montiert. Die Magnetbaugruppen 3 sind in einem Stanzgitter 5 kontaktiert und montiert. Diese Baugruppe wird mit anderen Bauteilen als Anbausteuereinheit 6 auf den Fluidblock 4 mit den Magnetventilpatronen 2 montiert. Ein Magnetventil für das Hydraulikaggregat gemäß Figur 1, welches beispielsweise in einem Antiblockiersystem (ABS) oder einem Antriebsschlupfregelsystem (ASR-System) oder einem elektronischen Stabilitätsprogrammsystem (ESP-System) eingesetzt wird, ist in Figur 2 dargestellt. Wie aus Figur 2 ersichtlich ist, umfasst das Magnetventil 7 neben der Magnetbaugruppe 3, welche einen Spulenkörper 3.1 mit einer Wicklung 3.2, eine elektrische Kontaktierung 3.3, ein Gehäuse 3.4 und eine Abdeckscheibe 3.7 umfasst, eine Ventilpatrone 2, welche einen Polkern 2.1, einen Stößel 2.2, eine Kapsel 2.3, einen Ventileinsatz 2.4 und eine Rückstellfeder 2.5 umfasst. Bei der Herstellung des Magnetventils 7 werden die Kapsel 2.3 und der Ventileinsatz 2.4 der Ventilpatrone 2 durch Pressen aufeinander gefügt und durch eine Dichtschweißung 2.8 wird die Ventilpatrone 2 hydraulisch gegenüber der Atmosphäre abgedichtet. Zusätzlich nimmt der Ventileinsatz 2.4 die im hydraulischen System auftretenden Druckkräfte auf und leitet diese über einen Verstemmflansch 2.9 an einen nicht dargestellten Verstemmbereich auf dem Fluidblock 4 weiter. Zudem nimmt der Ventileinsatz 2.4 den so genannten Ventilkörper 2.6 auf, welcher einen Dichtsitz 2.7 umfasst, in welchen der Stößel 2.2 dichtend eintaucht, um die Dichtfunktion des Magnetventils 7 umzusetzen. Wie weiter aus Figur 2 ersichtlich ist, bildet ein Innenumfang des Gehäuses 3.4 mit einem ersten Durchmesser 11 einen ersten Kontaktbereich 3.5 für eine Schnittstelle zwischen der Magnetventilpatrone 2 und der Magnetgruppe 3 und ein Innenumfang des Spulenkörpers 3.1 mit einem zweiten Durchmesser 12 bildet einen zweiten Kontaktbereich 3.6 für die Schnittstelle zwischen der Magnetventilpatrone 2 und der Magnetbaugruppe 3. Die Schnittstelle ist aufgrund der jeweiligen Teiletoleranzen und der gewünschten einfachen Aufsteckmontage in den Durchmessern 11 und 12 spielbehaftet. Das bedeutet, dass die Relativposition zwischen der Magnetventilpatrone 2 und der Magnetgruppe 3 einen radialen Freiheitsgrad aufweist, welcher die Streuung von Funktionskennwerten des Magnetventils 7 beeinflussen kann: Es können sich große Unterschiede zwischen den Magnetventilen 7 einer Magnetventilgruppe 10 ergeben, wenn die Magnetventilpatrone 2 und die Magnetbaugruppe 3 zueinander zentriert sind, was zufallsbedingt auftreten kann, oder wenn die Magnetbaugruppe 3 an der Magnetventilpatrone 2 einseitig anliegt oder wenn Zwischenpositionen zwischen den beiden Extrempositionen von der Magnetbaugruppe 3 eingenommen werden.

### Vorteile der Erfindung

Das erfindungsgemäße Hydraulikaggregat mit den Merkmalen des unabhängigen Patentanspruchs 1 hat demgegenüber den Vorteil, dass zwischen mindestens zwei benachbarten Magnetventilen einer Magnetventilgruppe eine Positionierungseinheit angeordnet ist, welche eine Kraft auf mindestens zwei benachbarte Magnetventile ausübt, so dass eine jeweilige Magnetbaugruppe der benachbarten Magnetventile eine definierte radiale Position zu einer zugehörigen Ventilpatrone der benachbarten Magnetventile einnimmt. Durch die erfindungsgemäße Positionierungseinheit richten sich die Magnetbaugruppen der mindestens zwei benachbarten Magnetventile gegenseitig aus, d.h. die jeweilige Magnetbaugruppe der benachbarten Magnetventile legt sich an einer Schnittstelle zwischen einer Magnetbaugruppe und einer Magnetventilpatrone mit ihrem Innendurchmesser radial an die zugehörige Magnetventilpatrone an. Dadurch nehmen die Magnetbaugruppen der benachbarten Magnetventile immer eine vorbestimmte definierte Position bezüglich der zugehörigen Magnetventilpatrone ein. Somit kann in vorteilhafter Weise durch die erzeugte Kraftwirkung unabhängig von auftretenden unterschiedlichen Einzelteilmaßen innerhalb von Toleranzgrenzen eine definierte Positionierung zwischen den betreffenden Magnetventilpatronen und den zugehörigen Magnetbaugruppen der Magnetventile der Magnetventilgruppe des erfindungsgemäßen Hydraulikaggregats erreicht werden. Zudem kann ein für die Streuung von Funktionswerten der Magnetventile verantwortlicher Freiheitsgrad beseitigt werden, wodurch eine Erhöhung der Teilequalitäten der betroffenen Magnetventile der Magnetventilgruppe erzielt werden kann, so dass eine genauere Steuerung des Hydraulikaggregats möglich ist und beispielsweise Einspritzmengen und Stelldrücke genauer dosiert werden können.

Durch die in den abhängigen Ansprüchen aufgeführten Maßnahmen und Weiterbildungen sind vorteilhafte Verbesserungen des im unabhängigen Patentanspruch angegebenen Hydraulikaggregats möglich.

Besonders vorteilhaft ist, dass die Positionierungseinheit zur Ausrichtung der Magnetbaugruppen der benachbarten Magnetventile erste Führungsmittel umfasst, welche über ein Federelement miteinander gekoppelt sind und in einer ersten vorgebbaren Höhe auf die jeweilige Magnetbaugruppe der benachbarten Magnetventile wirken. Das beispielsweise als Federzunge ausgeformte Federelement übt eine radiale Kraft auf jede der Magnetbaugruppen aus. Zusätzlich kann die Positionierungseinheit zur Ausrichtung der Magnetbaugruppen der benachbarten Magnetventile zweite Führungsmittel umfassen, welche über das Federelement miteinander gekoppelt sind und in einer zweiten vorgebbaren Höhe auf die jeweilige Magnetbaugruppe der benachbarten Magnetventile wirken, so dass mehrere Kraftangriffspunkte an den Magnetbaugruppen der benachbarten Magnetventile erzeugt werden.

Die ersten Führungsmittel und/oder die zweiten Führungsmittel sind beispielsweise als klammerförmige Ausformungen ausgeführt, welche an die äußere Form der Magnetbaugruppe angepasst sind und die Magnetbaugruppe über den wesentlichen Teil des Umfangs umgreifen oder die Magnetbaugruppe wenigstens teilweise umgreifen. So können zur Befestigung der Positionierungseinheit die ersten Führungsmittel beispielsweise so ausgeführt sein, dass sie die Magnetbaugruppe über den wesentlichen Teil des Umfangs umgreifen und die zweiten Führungsmittel können so ausgeführt sein, dass sie nur teilweise an den Umfang der Magnetbaugruppe angelegt sind. Alternativ können zur Befestigung der Positionierungseinheit die zweiten Führungsmittel beispielsweise so ausgeführt sein, dass sie die Magnetbaugruppe über den wesentlichen Teil des Umfangs umgreifen und die ersten Führungsmittel können so ausgeführt sein, dass sie nur teilweise an den Umfang der Magnetbaugruppe angelegt sind. Alternativ können die ersten Führungsmittel und/oder die zweiten Führungsmittel als Stege ausgeführt werden, welche punktuell auf die Magnetbaugruppe wirken.

In Ausgestaltung des erfindungsgemäßen Hydraulikaggregats ist die Positionierungseinheit zwischen zwei in einer ersten Richtung benachbarten Magnetventilen angeordnet und erzeugt eine Kraft, welche entlang der ersten Richtung zwischen den zwei benachbarten Magnetventilen wirkt.

In weiterer Ausgestaltung des erfindungsgemäßen Hydraulikaggregats sind zwei parallele Positionierungseinheiten, welche jeweils zwischen zwei in der ersten Richtung benachbarten Magnetventilen wirken, über ein in eine zweite Richtung verlaufendes Abstandselement gekoppelt, so dass eine stabilisierende Wirkung in zwei Richtungen entsteht, wobei die erste und die zweite Richtung senkrecht zueinander verlaufen können. Dies ermöglicht in vorteilhafter Weise, dass mehr als zwei Magnetbaugruppen miteinander gekoppelt und ausgerichtet werden, so dass in vorteilhafter Weise die Gesamtteileanzahl reduziert wird und ein Verdrehen der Positionierungseinheit mit einhergehenden Problemen bei der Montage umgangen werden können.

Die Positionierungseinheiten sind aus Materialien herstellbar, welche keine oder nur eine geringe magnetische Leitfähigkeit aufweisen, und werden beispielsweise als Kunststoffspritzteile hergestellt.

### Zeichnung

Vorteilhafte, nachfolgend beschriebene Ausführungsformen der Erfindung sowie das zu deren besserem Verständnis oben erläuterte, herkömmliche Ausführungsbeispiel sind in den Zeichnungen dargestellt. Es zeigen:
- Figur 1: eine schematische Explosionsdarstellung eines Hydraulikaggregats,
- Figur 2: eine schematische Schnittdarstellung eines Magnetventils für das Hydraulikaggregat gemäß Figur 1,
- Figur 3: eine schematische Seitenansicht eines ersten Ausführungsbeispiels einer Magnetventilbaugruppe für das Hydraulikaggregat gemäß Figur 1,
- Figur 4: eine schematische Draufsicht auf einen Teil der Magnetventilbaugruppe gemäß Figur 3,
- Figur 5: eine schematische Seitenansicht eines zweiten Ausführungsbeispiels einer Magnetventilbaugruppe für das Hydraulikaggregat gemäß Figur 1,
- Figur 6: eine schematische Draufsicht auf einen Teil der Magnetventilbaugruppe gemäß Figur 5, und
- Figur 7: eine schematische Draufsicht auf ein drittes Ausführungsbeispiel einer Magnetventilbaugruppe für das Hydraulikaggregat gemäß Figur 1.

### Beschreibung

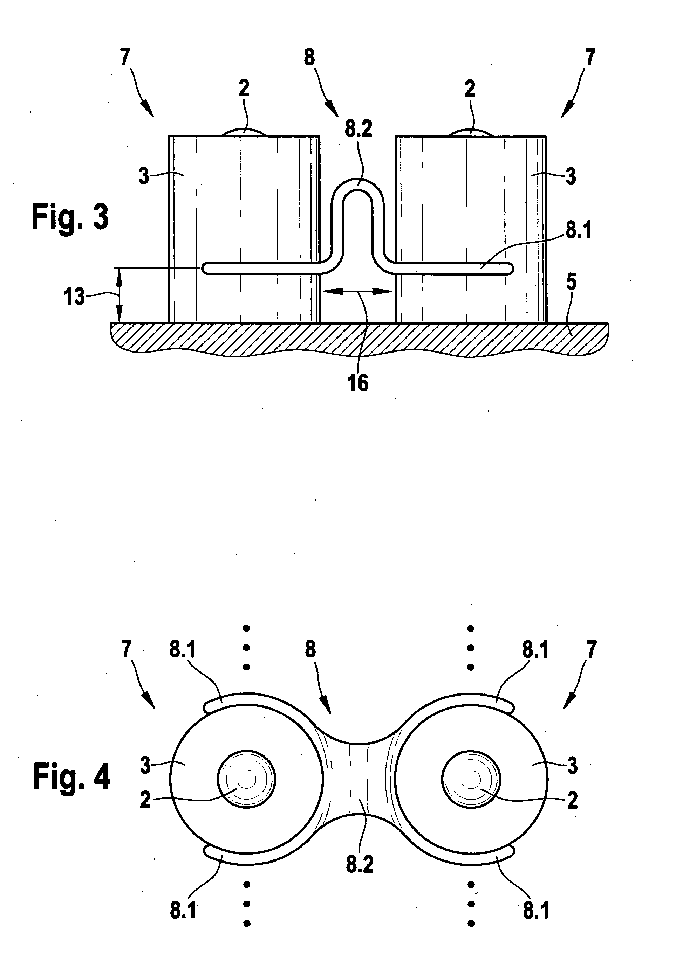

Wie aus Figur 3 und 4 ersichtlich ist, umfasst ein erstes Ausführungsbeispiel einer Magnetventilbaugruppe für ein Hydraulikaggregat mehrere Magnetventile 7, von welchen beispielhaft zwei benachbarte Magnetventile 7 dargestellt sind. Die beiden benachbarten Magnetventile 7 umfassen jeweils eine Ventilpatrone 2 und eine um die Ventilpatrone 2 angeordnete Magnetbaugruppe 3. Zwischen den beiden benachbarten Magnetventilen 7 ist eine Positionierungseinheit 8 angeordnet, welche eine Kraft 16 auf die beiden benachbarten Magnetventile 7 ausübt, so dass die jeweilige Magnetbaugruppe 3 eine definierte radiale Position zur zugehörigen Ventilpatrone 2 einnimmt. Wie weiter aus Figur 3 und 4 ersichtlich ist, umfasst die Positionierungseinheit 8 zur Ausrichtung der Magnetbaugruppen 3 der benachbarten Magnetventile 7 erste Führungsmittel 8.1, welche über ein zungenartiges Federelement 8.2 miteinander gekoppelt sind und in einer vorgebbaren Höhe 13 auf die jeweilige Magnetbaugruppe 3 der benachbarten Magnetventile 7 wirken. Die ersten Führungsmittel 8.1 sind als klammerförmige Ausformungen ausgeführt und an die äußere Form der Magnetbaugruppe 3 angepasst. Zur Befestigung der Positionierungseinheit 8 an den Magnetbaugruppen 3 der benachbarten Magnetventile 7 umgreifen die klammerförmigen Ausformungen 8.1 jeweils den wesentlichen Teil des Umfangs der entsprechenden Magnetbaugruppe 3. Zur Ausrichtung der Magnetventile 7 der Magnetventilbaugruppe für das Hydraulikaggregat sind mehrere Positionierungseinheiten 8 vorgesehen, welche jeweils zwischen zwei in einer Richtung benachbarten Magnetventilen 7 angeordnet sind.

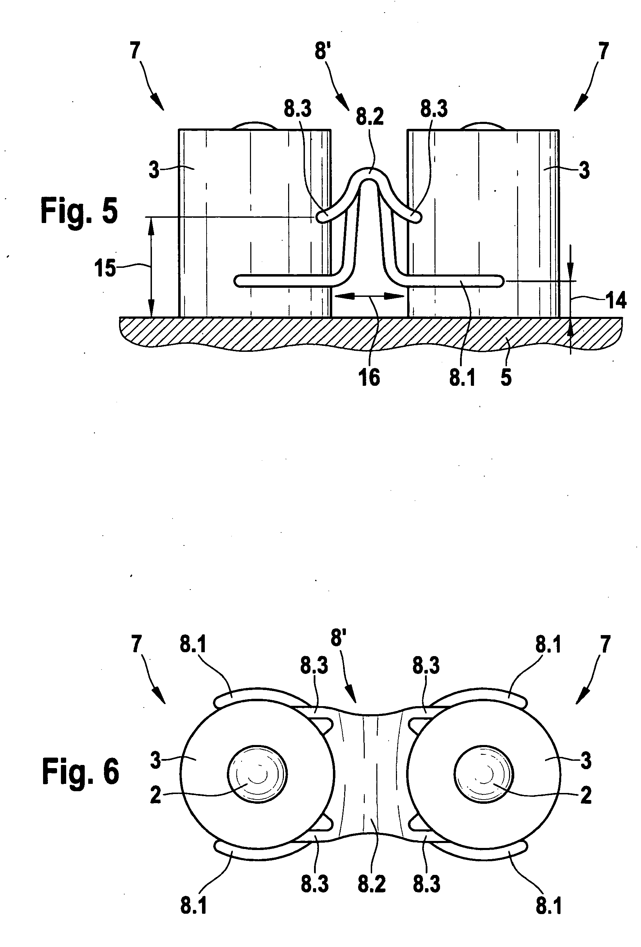

Wie aus Figur 5 und 6 ersichtlich ist, umfasst ein zweites Ausführungsbeispiel einer Magnetventilbaugruppe für ein Hydraulikaggregat mehrere Magnetventile 7, von welchen analog zum ersten Ausführungsbeispiel beispielhaft zwei benachbarte Magnetventile 7 dargestellt sind. Die beiden benachbarten Magnetventile 7 umfassen ebenfalls jeweils eine Ventilpatrone 2 und eine um die Ventilpatrone 2 angeordnete Magnetbaugruppe 3. Zwischen den beiden benachbarten Magnetventilen 7 ist eine Positionierungseinheit 8' angeordnet, welche eine Kraft 16 auf die beiden benachbarten Magnetventile 7 ausübt, so dass die jeweilige Magnetbaugruppe 3 eine definierte radiale Position zur zugehörigen Ventilpatrone 2 einnimmt. Im Unterschied zum ersten Ausführungsbeispiel gemäß Figur 3 und 4 umfasst die Positionierungseinheit 8' zur Verbesserung der Ausrichtung der Magnetbaugruppen 3 der benachbarten Magnetventile 7 erste Führungsmittel 8.1 und zweite Führungsmittel 8.3, welche über ein zungenartiges Federelement 8.2 miteinander gekoppelt sind und in verschiedenen vorgebbaren Höhen 14, 15 auf die jeweilige Magnetbaugruppe 3 der benachbarten Magnetventile 7 wirken. Die ersten Führungsmittel 8.1 sind analog zum ersten Ausführungsbeispiel gemäß Figur 3 und 4 als klammerförmige Ausformungen ausgeführt, an die äußere Form der Magnetbaugruppe 3 angepasst und umgreifen zur Befestigung an den Magnetbaugruppen 3 jeweils den wesentlichen Teil des Umfangs der entsprechenden Magnetbaugruppe 3. Die zweiten Führungsmittel 8.3 sind im dargestellten zweiten Ausführungsbeispiel an die äußere Form der Magnetbaugruppe 3 angepasst, umgreifen teilweise den Umfang der entsprechenden Magnetbaugruppe 3 und weisen Stege auf, welche punktuell in der zweiten Höhe 15 auf die Magnetbaugruppen 3 wirken. Zur Ausrichtung der Magnetventile 7 der Magnetventilbaugruppe für das Hydraulikaggregat sind mehrere Positionierungseinheiten 8 vorgesehen, welche jeweils zwischen zwei in einer Richtung benachbarten Magnetventilen 7 angeordnet sind.

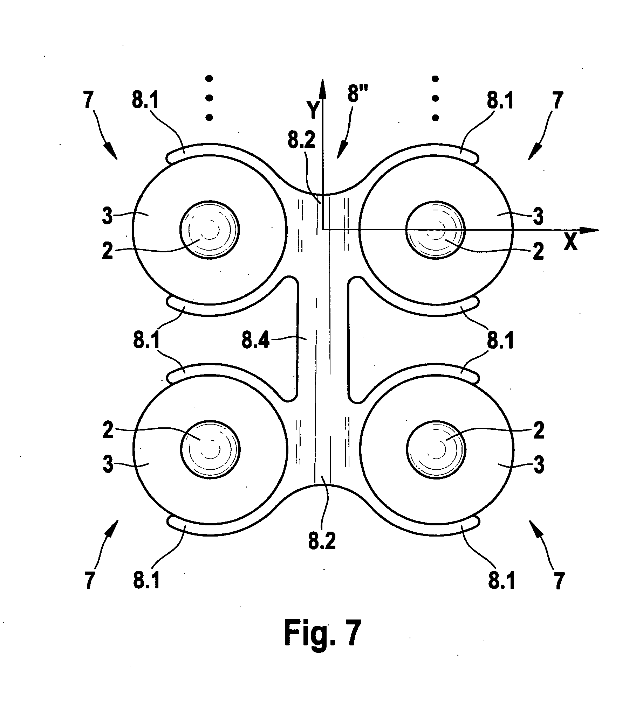

Wie aus Figur 7 ersichtlich ist, umfasst ein drittes Ausführungsbeispiel einer Magnetventilbaugruppe für ein Hydraulikaggregat mehrere Magnetventile 7, von welchen beispielhaft vier zueinander benachbarte Magnetventile 7 dargestellt sind. Analog zum ersten und zweiten Ausführungsbeispiel umfassen die benachbarten Magnetventile 7 jeweils eine Ventilpatrone 2 und eine um die Ventilpatrone 2 angeordnete Magnetbaugruppe 3. Zwischen den benachbarten Magnetventilen 7 ist eine Positionierungseinheit 8" angeordnet, welche zwischen Magnetventilen, welche in einer ersten Richtung X benachbart sind, eine Kraft erzeugen, die entlang der ersten Richtung X zwischen den benachbarten Magnetventilen 7 wirkt. Durch die wirkende Kraft 16 nimmt die jeweilige Magnetbaugruppe 3 eine definierte radiale Position zur zugehörigen Ventilpatrone 2 ein. Im Unterschied zum ersten Ausführungsbeispiel gemäß Figur 3 und 4 koppelt die Positionierungseinheit 8" des dritten Ausführungsbeispiels zwei parallel verlaufende Positionierungseinheiten 8, welche analog zum ersten Ausführungsbeispiel mit ersten Führungsmitteln 8.1 ausgeführt sind und jeweils zwischen zwei in der ersten Richtung X benachbarten Magnetventilen 7 wirken, über ein in eine zweite Richtung Y verlaufendes Abstandselement 8.4, so dass eine stabilisierende Wirkung in zwei Richtungen X, Y entsteht, wobei die erste und die zweite Richtung X, Y vorzugsweise senkrecht zueinander verlaufen. Durch die Kopplung von mehr als zwei benachbarten Magnetventilen 7 wird in vorteilhafter Weise die Gesamtteileanzahl reduziert und ein Verdrehen der Positionierungseinheit 8" um die X-Achse mit einhergehenden Problemen für Montage und Funktion können verhindert werden.

Alternativ können über das in eine zweite Richtung Y verlaufende Abstandselement 8.4 bei einer nicht dargestellten Ausführungsform zwei parallel verlaufende Positionierungseinheiten 8' gekoppelt werden, welche analog zum zweiten Ausführungsbeispiel mit ersten und zweiten Führungsmitteln 8.1 und 8.3 ausgeführt sind und jeweils in verschiedenen vorgebbaren Höhen 14, 15 zwischen zwei in der ersten Richtung X benachbarten Magnetventilen 7 wirken. Zudem können zur Ausrichtung der Magnetventile 7 der Magnetventilbaugruppe für das Hydraulikaggregat mehrere Positionierungseinheiten 8" vorgesehen werden, welche jeweils zwischen vier in zwei Richtungen X und Y zueinander benachbarte Magnetventile 7 angeordnet sind. Zudem kann die Positionierungseinheit 8" bei einem nicht dargestellten Ausführungsbeispiel weitere in die zweite Richtung Y verlaufende Abstandselemente 8.4 umfassen, welche weitere parallel in die erste Richtung X verlaufende Positionierungseinheiten 8 und 8" miteinander koppeln.

Ausreichende axiale Kräfte gegen das Abheben der Magnetbaugruppen 3 von den Magnetventilpatronen 2 werden durch geeignete Bauteile einer Steuereinheit 6 aufgebracht, welche beispielsweise gemäß Figur 1 über ein Steuergitter 5 auf die Magnetbaugruppen 3 wirkt. Die vorgeschlagenen Positionierungseinheiten 8, 8', 8" können für eine leichte und sichere Montage und zur Erzeugung der Federwirkung aus geeigneten (Stahl-)Blechen oder Kunststoffen hergestellt werden. Zudem sollte der Werkstoff vorzugsweise keinen oder nur einen sehr geringen magnetischen Nebenfluss aufnehmen, um die erzeugte Magnetkraft für die Magnetventilfunktion nicht zu reduzieren. Kunststoffe bieten durch ihre Herstellprozesse (z.B. Spritzgießen) evtl. größere Freiheiten bei der Bauteilgestaltung als Metallwerkstoffe, müssen aber in Bezug auf Formstabilität unter Temperatureinfluss und Zeiteinfluss entsprechend ausgewählt werden.

## Patentansprüche

1. Hydraulikaggregat mit einer Magnetventilgruppe (10), welche mindestens zwei Magnetventile (7) umfasst, wobei die mindestens zwei Magnetventile (7) jeweils eine Ventilpatrone (2) und eine um die Ventilpatrone (2) angeordnete Magnetbaugruppe (3) umfassen, **gekennzeichnet durch** eine Positionierungseinheit (8, 8', 8"), welche zwischen mindestens zwei benachbarten Magnetventilen (7) angeordnet ist und eine Kraft (16) auf mindestens zwei benachbarte Magnetventile (7) ausübt, so dass die jeweilige Magnetbaugruppe (3) des Magnetventils (7) eine definierte radiale Position zur zugehörigen Ventilpatrone (2) des Magnetventils (7) einnimmt.

2. Hydraulikaggregat nach Anspruch 1, **dadurch gekennzeichnet, dass** die Positionierungseinheit (8, 8', 8") zur Ausrichtung der Magnetbaugruppen (3) der benachbarten Magnetventile (7) erste Führungsmittel (8.1) umfasst, welche über ein Federelement (8.2) miteinander gekoppelt sind und in einer ersten vorgebbaren Höhe (14) auf die jeweilige Magnetbaugruppe (3) der benachbarten Magnetventile (7) wirken.

3. Magnetventil nach Anspruch 2, **dadurch gekennzeichnet, dass** die Positionierungseinheit (8') zur Ausrichtung der Magnetbaugruppen (3) der benachbarten Magnetventile (7) zweite Führungsmittel (8.1) umfasst, welche über das Federelement (8.2) miteinander gekoppelt sind und in einer zweiten vorgebbaren Höhe (15) auf die jeweilige Magnetbaugruppe (3) der benachbarten Magnetventile (7) wirken.

4. Hydraulikaggregat nach Anspruch 2 oder 3, **dadurch gekennzeichnet, dass** die ersten Führungsmittel (8.1) und/oder die zweiten Führungsmittel (8.3) als klammerförmige Ausformungen ausgeführt sind, welche an die äußere Form der Magnetbaugruppe (3) angepasst sind und die Magnetbaugruppe (3) über den wesentlichen Teil des Umfangs umgreifen.

5. Hydraulikaggregat nach Anspruch 2 oder 3, **dadurch gekennzeichnet, dass** die ersten Führungsmittel (8.1) und/oder die zweiten Führungsmittel (8.3) als klammerförmige Ausformungen ausgeführt sind, welche an die äußere Form der Magnetbaugruppe (3) angepasst sind und die Magnetbaugruppe (3) teilweise umgreifen, und/oder als Stege, welche punktuell auf die Magnetbaugruppe (3) wirken.

6. Hydraulikaggregat nach Anspruch 5, **dadurch gekennzeichnet, dass** die zweiten Führungsmittel (8.3) Stege umfassen, welche punktuell auf die Magnetbaugruppe (3) wirken.

7. Hydraulikaggregat nach einem der Ansprüche 1 bis 6, **dadurch gekennzeichnet, dass** die Positionierungseinheit (8, 8') zwischen zwei in einer ersten Richtung (X) benachbarten Magnetventilen (7) angeordnet ist und eine Kraft (16) erzeugt, welche entlang der ersten Richtung (X) zwischen den zwei benachbarten Magnetventilen (7) wirkt.

8. Hydraulikaggregat nach Anspruch 7, **dadurch gekennzeichnet, dass** zwei parallele Positionierungseinheiten (8, 8'), welche jeweils zwischen zwei in der ersten Richtung (X) benachbarten Magnetventilen (7) wirken, über ein in eine zweite Richtung (Y) verlaufendes Abstandselement (8.4) gekoppelt sind, so dass eine stabilisierende Wirkung in zwei Richtungen (X, Y) entsteht, wobei die erste und die zweite Richtung (X, Y) senkrecht zueinander verlaufen.

9. Hydraulikaggregat nach einem der Ansprüche 1 bis 8, **dadurch gekennzeichnet, dass** die Positionierungseinheiten (8, 8', 8") aus einem Material herstellbar sind, welches keine oder eine geringe magnetische Leitfähigkeit aufweist.

10. Hydraulikaggregat nach Anspruch 9, **dadurch gekennzeichnet, dass** die Positionierungseinheit (8, 8', 8") als Kunststoffspritzteil herstellbar ist.

## Claims

1. Hydraulic assembly with a solenoid-valve group (10) which comprises at least two solenoid valves (7), the at least two solenoid valves (7) comprising in each case a valve cartridge (2) and a magnet subassembly (3) arranged around the valve cartridge (2), **characterized by** a positioning unit (8, 8', 8'') which is arranged between at least two adjacent solenoid valves (7) and which exerts a force (16) on at least two adjacent solenoid valves (7), so that the respective magnet subassembly (3) of the solenoid valve (7) assumes a defined radial position with respect to the associated valve cartridge (2) of the solenoid valve (7).

2. Hydraulic assembly according to Claim 1, **characterized in that** the positioning unit (8, 8', 8'') for the orientation of the magnet subassemblies (3) of the adjacent solenoid valves (7) comprises first guide means (8.1) which are coupled to one another via a spring element (8.2) and, at a first predeterminable height (14), act on the respective magnet subassembly (3) of the adjacent solenoid valves (7).

3. Hydraulic assembly according to Claim 2, **characterized in that** the positioning unit (8') for the orientation of the magnet subassemblies (3) of the adjacent solenoid valves (7) comprises second guide means (8.3) which are coupled to one another via the spring element (8.2) and, at a second predeterminable height (15), act on the respective magnet subassembly (3) of the adjacent solenoid valves (7).

4. Hydraulic assembly according to Claim 2 or 3, **characterized in that** the first guide means (8.1) and/or the second guide means (8.3) are designed as clip-shaped protuberances which are adapted to the outer shape of the magnet subassembly (3) and which surround the magnet subassembly (3) over the substantial part of the circumference.

5. Hydraulic assembly according to Claim 2 or 3, **characterized in that** the first guide means (8.1) and/or the second guide means (8.3) are designed as clip-shaped protuberances which are adapted to the outer shape of the magnet subassembly (3) and which partially surround the magnet subassembly (3) and/or as webs which act on the magnet subassembly (3) in a punctiform manner.

6. Hydraulic assembly according to Claim 5, **characterized in that** the second guide means (8.3) comprise webs which act on the magnet subassembly (3) in a punctiform manner.

7. Hydraulic assembly according to one of Claims 1 to 6, **characterized in that** the positioning unit (8, 8') is arranged between two solenoid valves (7) adjacent in a first direction (X) and generates a force (16) which acts along the first direction (X) between the two adjacent solenoid valves (7).

8. Hydraulic assembly according to Claim 7, **characterized in that** two parallel positioning units (8, 8'), which act in each case between two solenoid valves (7) adjacent in the first direction (X), are coupled via a spacer element (8.4) running in a second direction (Y), so that a stabilizing action in two directions (X, Y) is obtained, the first and the second direction (X, Y) running perpendicularly with respect to one another.

9. Hydraulic assembly according to one of Claims 1 to 8, **characterized in that** the positioning units (8, 8', 8'') can be produced from a material which has no or low magnetic conductivity.

10. Hydraulic assembly according to Claim 9, **characterized in that** the positioning unit (8, 8', 8'') can be produced as a plastic injection moulding.

## Revendications

1. Ensemble hydraulique comprenant un groupe d'électrovannes (10), qui comprend au moins deux électrovannes (7), les au moins deux électrovannes (7) comprenant chacune une cartouche de soupape (2) et un module magnétique (3) disposé autour de la cartouche de soupape (2), **caractérisé par** une unité de positionnement (8, 8', 8"), qui est disposée entre au moins deux électrovannes adjacentes (7), et exerce une force (16) sur au moins deux électrovannes (7) adjacentes, de sorte que le module magnétique respectif (3) de l'électrovanne (7) adopte une position radiale définie par rapport à la cartouche de soupape (2) associée de l'électrovanne (7).

2. Ensemble hydraulique selon la revendication 1, **caractérisé en ce que** l'unité de positionnement (8, 8', 8") comprend, pour l'alignement des modules magnétiques (3) des électrovannes (7) adjacentes, des premiers moyens de guidage (8.1) qui sont accouplés les uns aux autres par le biais d'un élément de ressort (8.2) et qui agissent à une première hauteur prédéterminable (14) sur le module magnétique respectif (3) des électrovannes (7) adjacentes.

3. Ensemble hydraulique selon la revendication 2, **caractérisé en ce que** l'unité de positionnement (8') comprend, pour l'alignement des modules magnétiques (3) des électrovannes (7) adjacentes, des deuxièmes moyens de guidage (8.1) qui sont accouplés les uns aux autres par le biais de l'élément de ressort (8.2) et qui agissent à une deuxième hauteur prédéterminable (15) sur le module magnétique respectif (3) des électrovannes (7) adjacentes.

4. Ensemble hydraulique selon la revendication 2 ou 3, **caractérisé en ce que** les premiers moyens de guidage (8.1) et/ou les deuxièmes moyens de guidage (8.3) sont réalisés sous forme de formations en forme de pinces, qui sont adaptées à la forme extérieure du module magnétique (3) et qui viennent en prise autour du module magnétique (3) par rapport à la majeure partie de la périphérie.

5. Ensemble hydraulique selon la revendication 2 ou 3, **caractérisé en ce que** les premiers moyens de guidage (8.1) et/ou les deuxièmes moyens de guidage (8.3) sont réalisés sous forme de formations en forme de pinces, qui sont adaptées à la forme extérieure du module magnétique (3) et qui viennent en prise autour du module magnétique (3) partiellement et/ou en tant que nervures, qui agissent de manière ponctuelle sur le module magnétique (3).

6. Ensemble hydraulique selon la revendication 5, **caractérisé en ce que** les deuxièmes moyens de guidage (8.3) comprennent des nervures qui agissent ponctuellement sur le module magnétique (3).

7. Ensemble hydraulique selon l'une quelconque des revendications 1 à 6, **caractérisé en ce que** l'unité de positionnement (8, 8') est disposée entre deux électrovannes (7) adjacentes dans une première direction (X) et produit une force (16) qui agit le long de la première direction (X) entre les deux électrovannes (7) adjacentes.

8. Ensemble hydraulique selon la revendication 7, **caractérisé en ce que** deux unités de positionnement parallèles (8, 8'), qui agissent à chaque fois entre deux électrovannes (7) adjacentes dans la première direction (X), sont accouplées par le biais d'un élément d'espacement (8.4) s'étendant dans une deuxième direction (Y), de sorte qu'un effet de stabilisation se produise dans deux directions (X, Y), la première et la deuxième direction (X, Y) s'étendant perpendiculairement l'une à l'autre.

9. Ensemble hydraulique selon l'une quelconque des revendications 1 à 8, **caractérisé en ce que** les unités de positionnement (8, 8', 8") peuvent être fabriquées en un matériau qui ne présente aucune ou peu de conductibilité magnétique.

10. Ensemble hydraulique selon la revendication 9, **caractérisé en ce que** l'unité de positionnement (8, 8', 8") peut être fabriquée sous forme de pièce moulée par injection de plastique.
